# EUROPÄISCHE PATENTANMELDUNG

(11) **EP 2 141 384 A2**
(43) Veröffentlichungstag der Anmeldung: **06.01.2010**
(21) Anmeldenummer: 09008612.5
(22) Anmeldetag: 01.07.2009
(51) Int. Cl.: F16F 15/14

(54) **Drehschwingungsdämpfer**

(30) Priorität: 04.07.2008 DE 102008031419
(71) Anmelder: Muhr und Bender KG, 57439 Attendorn (DE)
(72) Erfinder: Schebitz, Michael, 57349 Attendorn (DE); Zacker, Matthias, 57439 Attendorn (DE)
(74) Vertreter: Oberwalleney, Stephan

(57) **Zusammenfassung**

Die Erfindung betrifft einen Drehschwingungsdämpfer 2, insbesondere für eine Kurbelwelle eines Kolbenmotors. Der Drehschwingungsdämpfer 2 umfaßt eine Nabe 3, die eine Drehachse A definiert, und einen Massekörper 4, der über zumindest ein Federelement an die Nabe 3 gekoppelt ist und gegenüber dieser frei drehschwingen kann, wobei der Massekörper 4 ringförmig gestaltet ist und koaxial zur Nabe 3 angeordnet ist,
wobei das zumindest eine Federelement aus einem Stahlwerkstoff besteht und in Form einer Biegefeder 5 gestaltet ist.

## Beschreibung

Die Erfindung betrifft einen Drehschwingungsdämpfer, insbesondere zur Anbringung an einer Kurbelwelle eines Kolbenmotors, insbesondere einer Brennkraftmaschine. Die Erfindung betrifft weiter eine Kurbelwellenanordnung mit einem Drehschwingungsdämpfer. Drehschwingungsdämpfer dienen dazu, in dem Kolbenmotor während der verschiedenen Schritte der Energieumwandlung vorkommende Schwingungen in Amplitude und Frequenz zu tilgen. Diese Schwingungen entstehen aufgrund zeitlich diskontinuierlicher, ungleichförmiger Drehmomente und Drehzahlverläufe in Abhängigkeit von Zylinderzahl, Verbrennungsverfahren, Arbeitstaktanzahl und Zündzeitpunkt.

Die genannten Drehschwingungsdämpfer, die üblicherweise eine Masse und ein Federelement aufweisen, sollen gezielt die Wirkung von Erregerkräften oder Erregermomenten kompensieren, damit für bestimmte Frequenzen oder bestimmte Frequenzbereiche einzelne Teile der Kurbelwelle in Ruhe verbleiben oder deutlich weniger schwingen.

Aus der DE 101 26 477 C1 ist ein Drehschwingungsdämpfer in Form eines sogenannten Scherspalt-Tilgers bekannt.

Aus der DE 10 2006 043 621 A1 ist ein Drehschwingungsdämpfer für eine Kurbelwelle eines Kolbenmotors bekannt. Dieser umfaßt ein Gehäuse, das an der Kurbelwelle befestigt ist, und eine Schwungmasse, die über Federelemente mit dem Gehäuse gekoppelt ist. Die Federelemente sind in Form von vorgespannten Schraubendruckfedern gestaltet, die in sich in Umfangsrichtung erstreckenden Fenstern des Gehäuses aufgenommen sind.

Aus der DE 10 2005 055 034 A1 ist ein Torsionsschwingungsdämpfer mit gewickelten Drahtfedern in einer Antriebsscheibe bekannt. Jeweils ein Ende der Drahtfedern ist mit einer Nabe und das andere Ende ist mit einem Scheibenkranz der Antriebsscheibe im Drehsinn festgelegt. So kann über die Drahtfedern Drehmoment zwischen der Nabe und dem Scheibenkranz übertragen werden.

Der vorliegenden Erfindung liegt die Aufgabe zugrunde, einen Drehschwingungsdämpfer, insbesondere für eine Kurbelwelle eines Kolbenmotors, vorzuschlagen, der einfach aufgebaut ist, ein geringes Gewicht aufweist und eine zuverlässige Tilgung von Drehschwingungen gewährleistet. Die Aufgabe liegt weiter darin, eine Kurbelwellenanordnung mit einem solchen Drehschwingungsdämpfer vorzuschlagen.

Die Lösung besteht in einem Drehschwingungsdämpfer, insbesondere für eine Kurbelwelle eines Kolbenmotors, umfassend
eine Nabe, die eine Drehachse A definiert, und einen Massekörper, der über zumindest ein Federelement an die Nabe gekoppelt ist und gegenüber dieser frei drehschwingen kann, wobei der Massekörper ringförmig gestaltet ist und koaxial zur Nabe angeordnet ist, wobei das zumindest eine Federelement aus einem Stahlwerkstoff besteht und in Form einer Biegefeder gestaltet ist.

Der erfindungsgemäße Drehschwingungsdämpfer hat den Vorteil, daß er aus wenigen Teilen besteht und damit einfach herstellbar ist. Gleichzeitig ermöglicht die zumindest eine Biegefeder, über die der Massekörper an die Nabe gekoppelt ist, eine zuverlässige Dämpfung bzw. Tilgung von Drehschwingungen des drehenden Bauteils. Der Drehschwingungsdämpfer eignet sich damit insbesondere zum Einsatz an einer Kurbelwelle eines Kolbenmotors. Hierfür wird die Nabe direkt oder indirekt, z. B. über eine Riemenscheibe, fest mit der Kurbelwelle verbunden, so daß der Drehschwingungsdämpfer gemeinsam mit der Kurbelwelle rotiert. Eine alternative Anwendungsmöglichkeit besteht darin, den Drehschwingungsdämpfer an einer entkoppelten Riemenscheibe zur Dämpfung bzw. Tilgung von Drehschwingungen anzubringen. Es ist vorzugsweise vorgesehen, daß der Massekörper ausschließlich mit dem zumindest einen Federelement verbunden ist. Das bedeutet, es ist kein weiteres Element oder Bauteil mit dem Massekörper verbunden, daß eine freie Drehschwingung des Massekörpers bremsen oder hemmen könnte.

Mit Biegefeder sind, wie der Name schon sagt, Federelemente gemeint, die so gestaltet bzw. so in dem Drehschwingungsdämpfer eingebaut sind, daß sie im wesentlichen auf Biegung beansprucht werden. Die Biegefedern erlauben eine kompakte Bauweise und gute Dämpfungseigenschaften. Sie sind aus einem metallischen Werkstoff hergestellt, vorzugsweise aus einem Federstahl, der durch eine hohe Elastizität und eine hohe Festigkeit gekennzeichnet ist. Der Massekörper ist vorzugsweise in Form eines geschlossenen Rings gestaltet, der koaxial zur Drehachse angeordnet ist. Insofern kann der Massekörper auch als Schwungrad bezeichnet werden. Damit der Massekörper geringe Unwuchten erzeugt, ist er vorzugsweise rotationssymmetrisch, insbesondere kreisringförmig gestaltet. Prinzipiell ist es auch denkbar, daß der Massekörper als offener Ring gestaltet ist oder aus zwei oder mehreren Ringabschnitten zusammengesetzt ist.

Die Funktionsweise des Drehschwingungsdämpfers ist folgendermaßen. Bei gleichförmiger Drehung des drehenden Bauteils, z. B. der Kurbelwelle oder der Riemenscheibe, wird der Massekörper ohne schwingende Drehbewegung mitgenommen. Beim Auftreten von kleinen überlagerten Schwingungsausschlägen kommt es zu einer Relativbewegung zwischen dem Massekörper und der Nabe. Diese Drehschwingungen werden von dem Drehschwingungsdämpfer in den Frequenzbereich der Leerlaufdrehzahl des Kolbenmotors verschoben und befinden sich somit im unkritischen Frequenzbereich. Die Eigenfrequenz des Drehschwingungsdämpfers wird so ausgelegt, daß sie gleich der Erregerfrequenz des drehenden Bauteils bzw. des Ausgangssystems ist. Auf diese Weise werden die Schwingungen des drehenden Bauteils eliminiert. Die Haupterregerfrequenzen der Kurbelwelle eines Verbrennungsmotors liegen, je nach Anzahl und Anordnung der Zylinder, zwischen 200 und 600 Hz. Diesem Wert muß die Eigenfrequenz des Drehschwingungsdämpfers entsprechen, damit die Drehschwingungen des Ausgangssystems getilgt werden können.

Nach einer ersten Möglichkeit erstreckt sich die Biegefeder in Umfangsrichtung um die Nabe herum, und zwar insbesondere zumindest über 270°. Dabei kann die Biegefeder insbesondere als Schenkelfeder gestaltet sein, die sich über weniger als einen vollen Umfang erstreckt, oder als Spiralfeder, die sich über mehr als einen vollen Umfang erstreckt. Die Schenkelfeder wird, wie die Spiralfeder, um ihre Achse auf Torsion beansprucht. Bei beiden Federelementen handelt es sich um eine gewundene Biegefeder, bei der unabhängig vom Durchmesser der Wicklung sich das äußere Moment auf den Federdraht als konstantes Biegemoment über die gesamte Drahtlänge der Wicklung auswirkt. Die zwangsläufige Änderung des Wicklungsdurchmessers infolge der Verdrehung bzw. der Drehschwingungen hat daher kaum Einfluß auf die Linearität der Biegefeder.

Bei der Ausführungsform als Spiralfeder ist vorzugsweise ein erstes Ende der Spirale mit der Nabe verbunden und ein zweites Ende der Spirale mit dem Massekörper verbunden. Vorzugsweise erstreckt sich die Spiralfeder um mindestens 360°, insbesondere um etwa 540°, um die Drehachse. Es ist insbesondere vorgesehen, daß die Spiralfeder einen ersten Anlageabschnitt aufweist, mit dem sie mit einer äußeren Umfangsfläche der Nabe in Anlagekontakt ist, ferner einen zweiten Anlageabschnitt, mit dem sie mit einer inneren Umfangsfläche des Massekörpers in Anlagekontakt ist, sowie einen zwischen dem ersten Anlageabschnitt mit dem zweiten Anlageabschnitt liegenden freien Übergangsabschnitt, der nicht mit der Nabe bzw. dem Massekörper in Anlage ist. Für eine gute Abstützung der Spiralfeder ist es günstig, wenn zumindest einer der Anlageabschnitte sich über einen Umfang von zumindest 180° erstreckt, das heißt über zumindest 180° mit der Nabe bzw. dem Massekörper in Kontakt ist. Der Übergangsabschnitt sollte sich über mindestens 90° erstrecken. Die Windungen der Spiralfeder liegen nach einer bevorzugten Ausgestaltung in einer Ebene; sie können sich jedoch auch in mehreren Ebenen erstrecken.

Nach einer weiteren Ausführungsform ist die Biegefeder in Axialansicht als wellenförmiger Ring gestaltet, der koaxial zur Nabe angeordnet ist. Dabei ist die wellenförmige Biegefeder in dem Ringraum zwischen einer Außenumfangsfläche der Nabe und einer Innenumfangsfläche des Massekörpers angeordnet. Mit wellenförmigem Verlauf ist gemeint, daß die Biegefeder um eine kreis-ringförmige Federmittellinie mäandert. Das wellenförmige Federelement weist innere Umkehrabschnitte auf, von denen zumindest eine Teilzahl mit der Nabe in Anlagekontakt ist, und äußere Umkehrabschnitte, von denen zumindest eine Teilzahl mit dem Massekörper in Anlagekontakt ist. Es ist ferner vorgesehen, daß die wellenförmige Biegefeder zumindest mit einem Umfangsbereich mit der Nabe fest verbunden ist, beispielsweise mittels Schweißen oder durch Formschluß, und mit zumindest einem Umfangsbereich mit dem Massekörper fest verbunden ist. Die übrigen Umkehrabschnitte, die nicht mit der Nabe bzw. dem Massekörper fest verbunden, aber mit diesen in Kontakt sind, haben aufgrund der Reibungskräfte eine dämpfende Wirkung. Es versteht sich, daß die Umkehrabschnitte prinzipiell eine beliebige Form haben können, z. B. können sie abgerundet sein, so daß sich ein sinusförmiges Profil ergibt, oder unstetig, so daß sich ein Sägezahnprofil ergibt. Vorzugsweise ist die wellenförmige Biegefeder umlaufend geschlossen, das heißt unendlich. Es ist jedoch auch denkbar, daß die wellenförmige Biegefeder offen bzw. geschlitzt ausgeführt ist. Die Anzahl der Wellen ist beliebig und orientiert sich an den Anforderungen an die Federsteifigkeit.

Nach einer weiteren Ausführungsform sind mehrere kürzere Biegefedern vorgesehen, die über den Umfang verteilt angeordnet sind. Diese sind mit dem Massekörper einerseits und mit der Nabe andererseits fest verbunden. Vorzugsweise sind die Biegefedern jeweils als offener Ring gestaltet, wobei auch die Verwendung geschlossener Ringe denkbar ist. Die Öffnung bzw. der Schlitz der Biegefedern ist insbesondere radial innen angeordnet, so daß der dem Schlitz gegenüberliegende Anlageabschnitt mit der Innenumfangsfläche des Massekörpers fest verbunden ist. Eine besonders günstige Dämpfung bei gleichzeitig kleinem radialen Bauraum wird erreicht, wenn die Biegefedern in Draufsicht eine ovale Kontur haben, wobei die Biegefedern so eingebaut sind, daß der größere Durchmesser sich in Umfangsrichtung erstreckt. Die Abmaße der Biegefedern sind vorzugsweise so, daß der größte Durchmesser kleiner, insbesondere um ein Vielfaches kleiner, als der Außendurchmesser der Radnabe ist.

Nach einer bevorzugten Ausgestaltung, die für alle der vorgenannten Ausführungsformen gilt, ist die Nabe napfförmig gestaltet und weist einen äußeren Ringsteg auf, an dem die zumindest eine Biegefeder befestigt ist. Zur Befestigung kann die zumindest eine Biegefeder stoffschlüssig oder formschlüssig mit der Nabe verbunden sein. Mit stoffschlüssiger Verbindung sind nicht lösbare Verbindungen gemeint, die sich nur durch Zerstörung der Verbindungsteile trennen lassen, wie z. B. Schweißen oder Löten. Unter formschlüssiger Verbindung werden solche Verbindungen verstanden, bei denen die Konturen der Verbindungsteile so gestaltet sind, daß sie ineinandergreifen und auftretende Kräfte zwischen den Verbindungsteilen an den Kontaktflächen abgestützt werden. Als Beispiel für eine formschlüssige Verbindung bei der wellenförmigen Biegefeder sei genannt, daß die Außenfläche der Nabe bzw. die Innenfläche des Massekörpers eine Kontur aufweist, in welche die Umkehrabschnitte der wellenförmigen Biegefeder eingreifen können, so daß sie gegen Relativverdrehung gegeneinander gesichert sind. Bei der Ausführungsform mit mehreren Biegefedern ist vorzugsweise vorgesehen, daß Nabe über den Umfang verteilte Fenster aufweist, in denen die Biegefedern einsitzen.

Für alle der vorgenannten Ausführungsformen gilt, daß die Biegefedern entweder aus Flachmaterial oder aus Rundmaterial hergestellt ist. Eine aus Flachmaterial hergestellte Biegefeder kann auch als Bandfeder bezeichnet werden. Diese ist insbesondere **dadurch gekennzeichnet, daß** die Dicke des Federbandes um ein Vielfaches kleiner ist als die Breite des Federbandes. Für einen einfachen Aufbau des Drehschwingungsdämpfers ist es günstig, wenn die Nabe und der Massekörper ausschließlich mittels der zumindest einen Biegefeder aneinander gekoppelt sind. Es ist jedoch auch prinzipiell denkbar, daß zwischen der Nabe und dem Massekörper weitere federnde oder dämpfende Elemente wirksam sind. In jedem Fall sind außen am Massenkörper keine weiteren Elemente angeschlossen oder mit diesem Verbunden, so daß der Massekörper gegenüber der Nabe frei drehschwingen kann.

Bevorzugte Ausführungsbeispiele werden nachstehend anhand der Zeichnungsfiguren erläutert. Es zeigt:
- Figur 1: einen erfindungsgemäßen Drehschwingungsdämpfer in einer ersten Ausführungsform
a) im Längsschnitt,
b) in Axialansicht,
c) im Querschnitt gemäß Schnittlinie C-C aus Figur 1 a;
- Figur 2: einen erfindungsgemäßen Drehschwingungsdämpfer in einer zweiten Ausführungsform
a) in Axialansicht,
b) im Längsschnitt;
- Figur 3: einen Drehschwingungsdämpfer in einer dritten Ausführungsform
a) in Axialansicht,
b) im Längsschnitt;
- Figur 4: einen erfindungsgemäßen Drehschwingungsdämpfer in einer vierten Ausführungsform
a) in perspektivischer Ansicht,
b) im Längsschnitt,
c) in Axialansicht und
d) im Querschnitt gemäß Schnittlinie D-D aus Figur 4b).

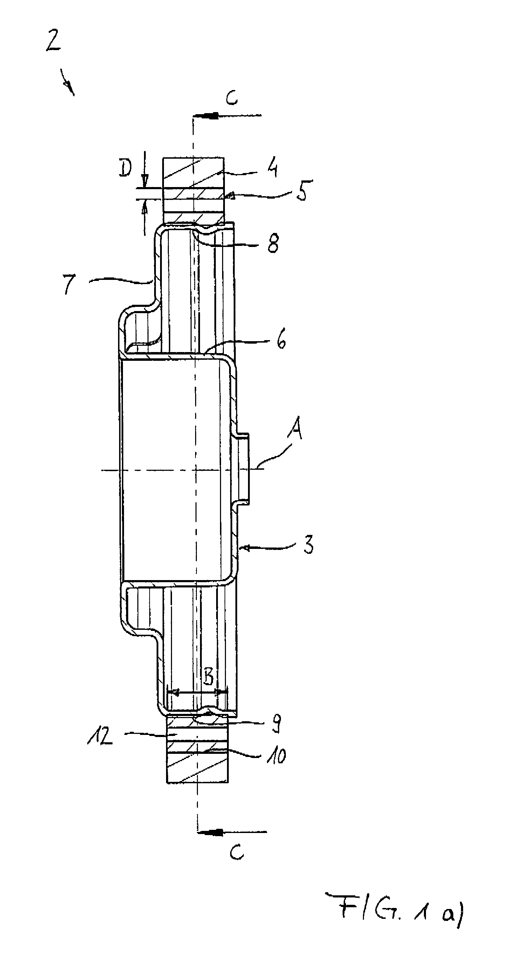

Die Figuren 1a bis 1c, die im folgenden gemeinsam beschrieben werden, zeigen einen Drehschwingungsdämpfer 2, der geeignet ist, Torsionseigenfrequenzen von drehenden Bauteilen, insbesondere von Kurbelwellen, zu unterdrücken. Der Drehschwingungsdämpfer 2 umfaßt eine Nabe 3, die eine Drehachse A definiert, sowie einen koaxial zur Nabe 3 angeordneten Massenkörper 4, der mittels eines Federelements 5 an die Nabe 3 gekoppelt ist. Dabei ist die Verbindung zwischen dem Massekörper 4 und der Nabe 3 so, daß der Massekörper 4 gegenüber der Nabe 3 frei drehschwingen kann. Es ist insbesondere vorgesehen, daß keine weiteren Verbindungselemente außer dem zumindest einen Federelement 5 zwischen der Nabe 3 und dem Massekörper 4 wirksam sind.

Die Nabe 3 ist napfförmig gestaltet und umfaßt einen inneren Ringsteg 6 zur Verbindung mit einer hier nicht dargestellten Kurbelwelle, einen daran anschließenden Radialabschnitt 7 sowie einen äußeren Ringsteg 8. Der äußere Ringsteg 8 hat eine etwa zylinderförmige Außenfläche 9, wobei zwischen dieser und einer inneren Umfangsfläche 10 des Massekörpers 4 ein Ringspalt 12 gebildet ist, in welchem das Federelement 5 aufgenommen ist.

Das Federelement 5 ist in der vorliegenden Ausführungsform als Biegefeder in Form einer Spiralfeder gestaltet, die sich etwa um 540 °C um die Nabe 3 erstreckt. Die Spiralfeder 5 umfaßt ein nach innen gekröpftes erstes Ende 13, das in eine entsprechende Ausnehmung der Nabe 3 eingreift, ein sich daran anschließenden Anlageabschnitt 14, der sich über mehr als 180 °C erstreckt und mit der äußeren Umfangsfläche 9 der Nabe 3 in Anlagekontakt ist, weiter einen sich daran anschließenden Übergangsabschnitt 15, der weder mit der Nabe noch mit dem Massekörper im Kontakt ist, sowie einen wiederum sich daran anschließenden zweiten Anlageabschnitt 16 mit größerem Radius, der sich über mehr als 180 °C erstreckt und mit der inneren Umfangsfläche 10 des Massekörpers 4 in Anlagekontakt ist. Das zweite Ende 17 der Spiralfeder ist nach außen gekröpft und greift formschlüssig in eine entsprechende Ausnehmung des Massekörpers 4 ein.

Es ist ersichtlich, daß der Massekörper 4 in Form eines umlaufend geschlossenen Rings gestaltet ist, der koaxial zur Nabe 3 angeordnet ist. Insofern kann der Massekörper 4 auch als Schwungrad bezeichnet werden. Dabei dient der Anlageabschnitt 16 der Spiralfeder 5 zur Zentrierung des Massekörpers 4 koaxial zur Nabe 3.

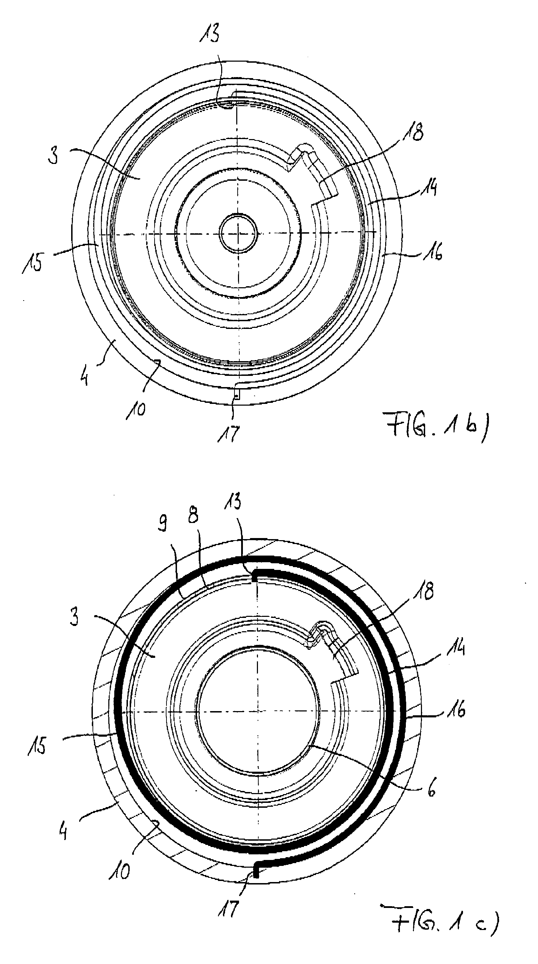

Wie insbesondere aus Figur 1 a hervorgeht, ist das Federelement 5 aus Flachmaterial hergestellt, daß heißt die Dicke D der Spiralfeder ist wesentlich kleiner als die Breite B der Spiralfeder. Insofern kann das Federelement 5 auch als spiralförmige Bandfeder bezeichnet werden.

Die Nabe 3 hat in einem Umfangsteilbereich radial außerhalb des inneren Ringstegs 6 eine Ausprägung 18, in die ein entsprechender Mitnehmer einer Riemenscheibe (nicht dargestellt) zur drehfesten Verbindung eingreifen kann. Die Riemenscheibe ist wiederum drehfest mit der Kurbelwelle verbunden und treibt über einen Antriebsriemen die Nebenaggregate des Kraftfahrzeugs an.

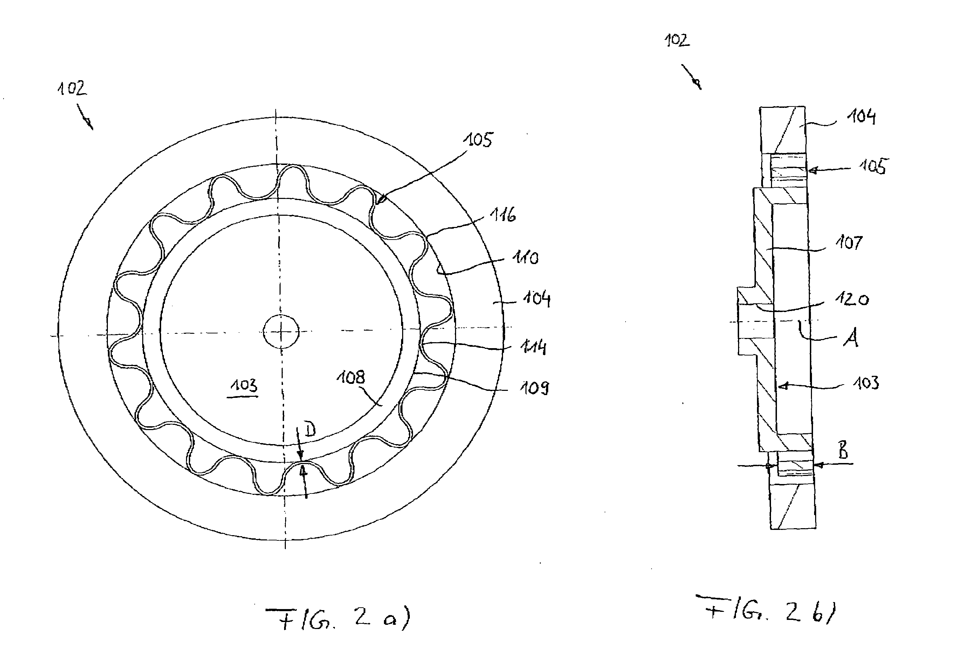

Die Figuren 2a und 2b, welche im folgenden gemeinsam beschrieben werden, zeigen einen Drehschwingungsdämpfer 102 in einer weiteren Ausführungsform. Dieser entspricht hinsichtlich seines Aufbaus und seiner Funktionsweise weitestgehend demjenigen aus Figur 1, so daß hinsichtlich der Gemeinsamkeiten auf die obige Beschreibung Bezug genommen werden kann. Dabei sind gleiche beziehungsweise einander entsprechende Bauteile mit um 100 hochgesetzten Bezugszeichen versehen. Im folgenden werden die Besonderheiten der vorliegenden Ausführungsformen erläutert.

Es ist ersichtlich, daß das Federelement 105 in Axialansicht als wellenförmige Biegefeder gestaltet ist. Die wellenförmige Biegefeder 105 umfaßt dabei äußere erste Umkehrabschnitte 116, die mit der Innenumfangsfläche 110 des Massekörpers 104 in Kontakt sind, sowie innere Umkehrabschnitte 114, die mit der Außenumfangsfläche 109 der Nabe 103 in Kontakt sind. Diese inneren und äußeren Umkehrabschnitte 114, 116 wechseln sich über den Umfang ab, wobei die Biegefeder um eine gedachte ringförmige Federmittellinie "mäandert".

Je nach gewünschter Federsteifigkeit können jeweils einer oder mehrere innere Umkehrabschnitte 114 mit der Nabe 103 fest verbunden sein, beispielsweise durch eine formschlüssige oder stoffschlüssige Verbindung. Dasselbe gilt für die äußeren Umkehrabschnitte 116, von denen zumindest einer mit dem Massekörper 104 fest verbunden ist. Die übrigen Umkehrabschnitte 114, 116, die nicht fest mit dem jeweiligen Bauteil, Nabe beziehungsweise Massekörper verbunden sind, sind mit diesem in Anlagekontakt. Auf diese Weise entstehen bei auftretenden Drehschwingungen Reibkräfte zwischen der Nabe 103 und den inneren Umkehrabschnitten 114 einerseits beziehungsweise zwischen den äußeren Umkehrabschnitten 116 und dem Massekörper 104 andererseits, die eine dämpfende Wirkung haben. Dies wirkt sich günstig auf die Tilgungseigenschaften des Drehschwingungsdämpfers 102 aus. Ist eine geringe Federsteifigkeit erforderlich, so ist die Anzahl der Anbindungspunkte niedrig. Ist umgekehrt eine hohe Federsteifigkeit gefordert, wird die wellenförmige Biegefeder 105 an mehreren Bereichen über den Umfang mit der Nabe 103 beziehungsweise dem Massenkörper 104 fest verbunden.

Bei der vorliegenden Ausführungsform erfolgt die feste Verbindung zwischen der Biegefeder 105 und dem Massekörper beziehungsweise der Nabe mittels Stoffschluß, insbesondere durch Schweißen. Es ist jedoch ebenso denkbar, daß die Nabe 103 beziehungsweise der Massekörper 104 eine an die Kontur der wellenförmigen Biegefeder 105 angepaßte Außenumfangsfläche 109 beziehungsweise Innenumfangsfläche 110 aufweist, in welche die Biegefeder 105 mit ihren äußeren beziehungsweise inneren Umkehrabschnitten 114, 116 formschlüssig eingreifen kann. Es ist aus Figur 2b ersichtlich, daß auch die vorliegende Biegefeder 105 aus Flachmaterial hergestellt ist, daß heißt eine deutlich größere Breite B als Dicke D aufweist. Es ist prinzipiell auch denkbar, daß die Biegefeder aus Rundmaterial hergestellt ist. Innen hat die Nabe 103 eine zentrale Bohrung 120 mit der sie an einer Riemenscheibe beziehungsweise an einer Kurbelwelle (nicht dargestellt) befestigt werden kann. Je nach den gewünschten Federeigenschaften kann auch vorgesehen sein, daß einer oder mehrere der Umkehrabschnitte nicht mit der jeweiligen Umfangsfläche in Anlegekontakt ist.

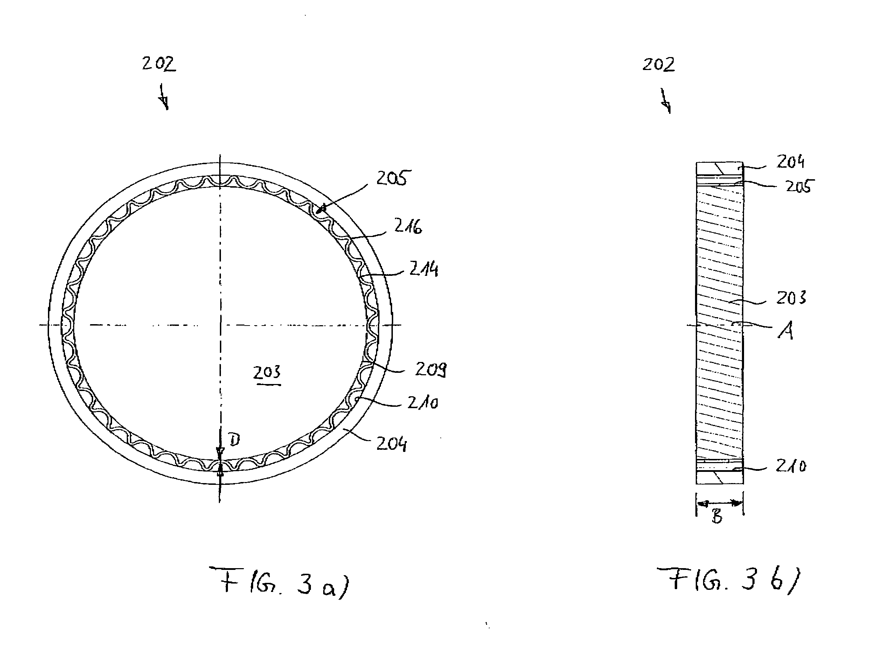

Der in den Figuren 3a und 3b schematisch gezeigte Drehschwingungsdämpfer 202 entspricht weitestgehend derjenigen aus Figur 2, sodaß auf die obige Beschreibung Bezug genommen wird. Dabei sind gleiche beziehungsweise einander entsprechende Bauteile mit nochmals um die Ziffer 100 hochgesetzten Bezugszeichen versehen.

Der einzige Unterschied besteht in der Ausgestaltung der wellenförmigen Biegefeder 205, die deutlich mehr innere und äußere Umkehrabschnitte 214, 216 über dem Umfang aufweist. Dabei ist der radiale Abstand zwischen der Außenumfangsfläche 209 der Nabe 203 und der innen Umfangsfläche 210 des Massekörpers 204 kleiner als bei der Ausführungsform gemäß Figur 2. Ein weiterer Unterschied besteht darin, daß die inneren Umkehrabschnitte 214 einen größeren Radius aufweisen als sie äußeren Umkehrabschnitte 216. Durch die individuelle Ausgestaltung der wellenförmigen Biegefeder 205 kann das Schwingungsverhalten beziehungsweise das Tilgungsverhalten des Drehschwingungsdämpfers 202 an die Erfordernisse angepaßt werden. Die Nabe 203 ist lediglich schematisch dargestellt, hat jedoch üblicherweise ebenfalls Befestigungsmittel zum Anschließen an einer Riemenscheibe beziehungsweise einer Kurbelwelle. Auch die vorliegende Biegefeder ist aus Flachmaterial hergestellt, wobei eine Ausgestaltung aus Rundmaterial ebenso denkbar ist.

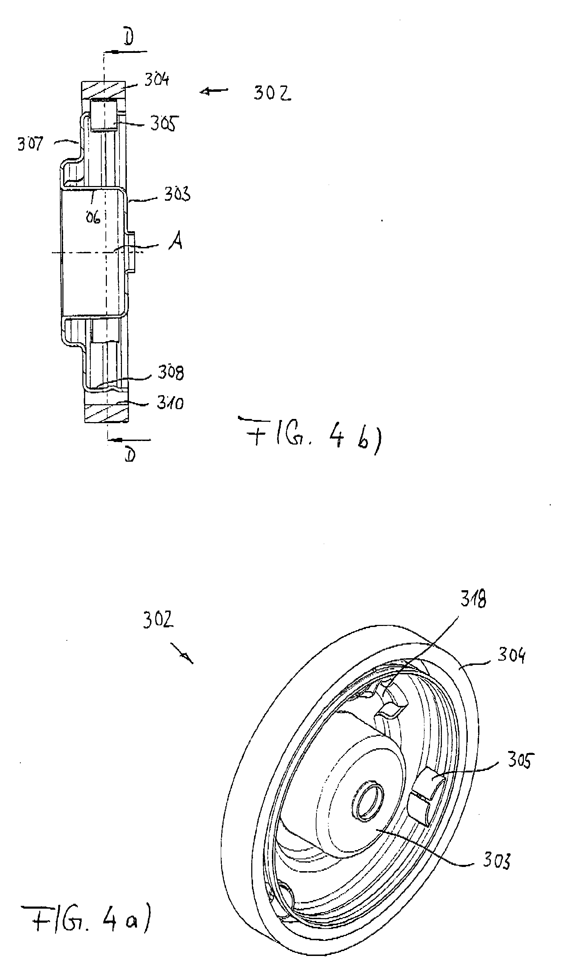

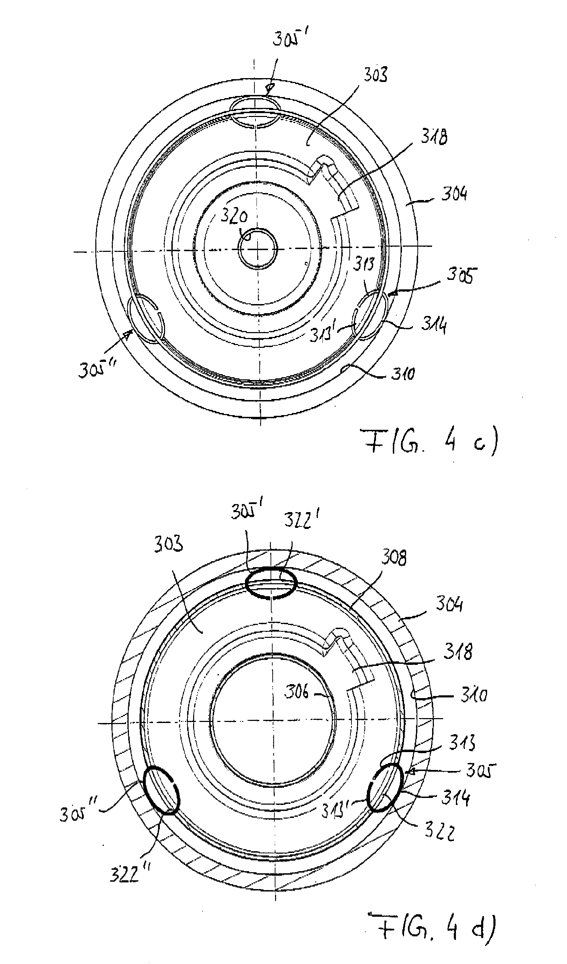

Die Figuren 4a bis 4d, weiche im folgenden gemeinsam beschrieben werden, zeigen einen erfindungsgemäßen Drehschwingungsdämpfer 302 in einer weiteren Ausführungsform. Diese entspricht in weiten Teilen derjenigen gemäß Figur 1, auf deren Beschreibung insofern Bezug genommen wird. Dabei sind gleiche beziehungsweise einander entsprechende Bauteile mit nochmals um die Ziffer 100 hochgesetzten Bezugszeichen versehen. Im folgenden wird auf die Besonderheiten der vorliegenden Ausführungsform eingegangen.

Der vorliegende Drehschwingungsdämpfer 302 ist **dadurch gekennzeichnet, daß** mehrere kürzere Biegefedern 305 zur Koppelung des Massekörpers 304 an die Nabe 303 angeordnet sind. Diese erstrecken sich jeweils nur über einen kleinen Teilumfangsabschnitt der Nabe 303, wobei mehrere dieser Biegefedern 305 über den Umfang verteilt angeordnet sind. Insbesondere ist ein größter Durchmesser der Biegefedern 305 jeweils kleiner als eine Umfangserstreckung der Nabe 303 von 45°. Vorliegend sind genau drei Biegefedern 305 vorgesehen, was günstig für die Zentrierung des Massekörpers 304 gegenüber der Nabe 303 ist. Es versteht sich jedoch, daß auch eine beliebige andere Anzahl von Biegefedern 305 denkbar ist, daß heißt zwei, vier oder mehr Biegefedern, wodurch sich die Federsteifigkeit dann entsprechend an die Anforderungen anpassen läßt. Die einzelnen Biegefedern 305 sind etwa C-förmig als offener Ring gestaltet, wobei die freien Enden 313, 313' der Biegefedern radial nach innen gerichtet sind und der dazwischen liegende Zwischenabschnitt 314 mit der inneren Umfangsfläche 310 des Massekörpers 304 in Anlage ist. Dabei ist insbesondere vorgesehen, daß die einzelnen Biegefedern 305 im Kontaktbereich mit der Innenumfangsfläche 310 mit dem Massekörper 304 fest verbunden sind, beispielsweise mittels Schweißen.

Es ist ersichtlich, daß die einzelnen Biegefedern 305, 305', 305", welche in Draufsicht eine ovale Kontur haben, in einzelnen Fenstern 322, 322', 322" der Nabe 303 aufgenommen sind. Die Fenster 322 sind über den Umfang verteilt in dem äußeren Ringsteg 308 der Nabe 303 angeordnet. Dabei sind die beiden Schenkel 313, 323' der Biegefedern 305 gegen die das Fenster 322 seitlich begrenzenden Wandungsabschnitte in Umfangsrichtung mit Vorspannung abgestützt. Die Biegefedern 305 haben in Draufsicht eine ovale Kontur, wobei sich die größere Diagonale des Ovals in Umfangsrichtung erstreckt. Hiermit wird der Bauraum des Drehschwingungsdämpfers gering gehalten.

Für alle der vorstehend genannten erfindungsgemäßen Drehschwingungsdämpfer gilt, daß diese einfach aufgebaut sind und eine zuverlässige Dämpfung beziehungsweise Tilgung von Drehschwingungen ermöglichen. Dadurch, daß die Federelemente stets als Biegefeder gestaltet sind, wirkt sich das von außen auf das Federelement einwirkende Drehmoment im Federdraht selbst als konstantes Biegemoment über die gesamte Drahtlänge aus. Aus diesem Grund hat eine geringfügige Änderung des Wicklungsdurchmessers in Folge der Verdrehung kaum einen Einfluß auf die Linearität der Biegefeder, so daß gute Dämpfungseigenschaften erreicht werden.

### Bezugszeichenliste

- 2, 102, ...: Drehschwingungsdämpfer
- 3, 103, ...: Nabe
- 4, 104, ...: Massekörper
- 5, 105, ...: Federelement
- 6, 106, ...: innerer Ringsteg
- 7, 107, ...: Radialabschnitt
- 8, 108, ...: äußerer Ringsteg
- 9, 109, ...: Außenumfangsfläche
- 10, 110, ..,: Innenumfangsfläche
- 12, 112, ...: Ringraum
- 13, 113, ...: Endabschnitt
- 14, 114, ...: Anlageabschnitt
- 15, 115, ...: Übergangsabschnitt
- 16, 116, ...: Anlageabschnitt
- 17, 117, ...: Endabschnitt
- 18, 118, ...: Ausnehmung
- 19, 119, ...: Vorsprung
- 20, 120, ...: Bohrung
- 322: Fenster

- A: Drehachse
- B: Breite
- D: Dicke

## Patentansprüche

1. Drehschwingungsdämpfer, insbesondere für eine Kurbelwelle eines Kolbenmotors, umfassend
eine Nabe (3, 103, ...), die eine Drehachse (A) definiert, und einen Massekörper (4, 104, ...), der über zumindest ein Federelement an die Nabe (3, 103, ...) gekoppelt ist und gegenüber dieser frei drehschwingen kann, wobei der Massekörper (4, 104, ...) ringförmig gestaltet ist und koaxial zur Nabe (3, 103, ...) angeordnet ist,
wobei das zumindest eine Federelement aus einem Stahlwerkstoff besteht und in Form einer Biegefeder (5, 105, ...) gestaltet ist. (alle Figuren)

2. Drehschwingungsdämpfer nach Anspruch 1,
**dadurch gekennzeichnet,**
**daß** der Messkörper (4, 104, ...) ausschließlich mit dem zumindest einen Federelement verbunden ist.

3. Drehschwingungsdämpfer nach Anspruch 1 oder 2,
**dadurch gekennzeichnet,**
**daß** sich die Biegefeder (5) um die Nabe (3) herum erstreckt, und zwar insbesondere zumindest über 270° in Umfangsrichtung. (Figur 1)

4. Drehschwingungsdämpfer nach einem der Ansprüche 1 bis 3,
**dadurch gekennzeichnet,**
**daß** die Biegefeder (5) spiralförmig um die Nabe (3) angeordnet ist und mit einem ersten Endabschnitt (13) mit der Nabe (3) verbunden ist und mit einem zweiten Endabschnitt (17) mit dem Massekörper (4) verbunden ist.

5. Drehschwingungsdämpfer nach einem der Ansprüche 1 bis 4,
**dadurch gekennzeichnet,**
**daß** die Biegefeder (5) einen ersten Anlageabschnitt (14) aufweist, mit dem sie mit einer äußeren Umfangsfläche (9) der Nabe (3) in Anlagekontakt ist, einen zweiten Anlageabschnitt (16), mit dem sie mit einer inneren Umfangsfläche (10) des Massekörpers (4) in Anlagekontakt ist, sowie einen den ersten Anlageabschnitt (14) mit dem zweiten Anlageabschnitt (16) verbindenden Übergangsabschnitt (15), wobei zumindest einer der Anlageabschnitte (14, 16) sich über einen Umfang von zumindest 180° erstreckt.

6. Drehschwingungsdämpfer nach Anspruch 1,
**dadurch gekennzeichnet,**
**daß** die Biegefeder (105, 205) in Axialansicht wellenförmig gestaltet ist und zwischen einer Außenumfangsfläche (109, 209) der Nabe (103, 203) und einer Innenumfangsfläche (110, 210) des Massekörpers (104, 204) angeordnet ist. (Figuren 2 und 3)

7. Drehschwingungsdämpfer nach Anspruch 6,
**dadurch gekennzeichnet,**
**daß** die wellenförmige Biegefeder (105, 205) umlaufend geschlossen ist.

8. Drehschwingungsdämpfer nach Anspruch 6 oder 7,
**dadurch gekennzeichnet,**
**daß** die wellenförmige Biegefeder (105, 205) innere Umkehrabschnitte (114, 214) aufweist, von denen zumindest eine Teilzahl mit der Nabe (103, 203) in Anlagekontakt ist, und äußere Umkehrabschnitte (116, 216), von denen zumindest eine Teilzahl mit dem Massekörper (104, 204) in Anlagekontakt ist.

9. Drehschwingungsdämpfer nach Anspruch 1,
**dadurch gekennzeichnet,**
**daß** mehrere Biegefedern (305) über den Umfang verteilt sind, mittels denen der Massekörper (304) an die Nabe (303) gekoppelt ist, wobei die Biegefedern (505) jeweils ringförmig gestaltet sind. (Figur 4)

10. Drehschwingungsdämpfer nach Anspruch 9,
**dadurch gekennzeichnet,**
**daß** die Biegefedern (305) jeweils einen Anlageabschnitt (314) aufweisen, der mit einer Innenumfangsfläche (310) des Massekörpers (304) verbunden ist.

11. Drehschwingungsdämpfer nach Anspruch 9 oder 10,
**dadurch gekennzeichnet,**
**daß** die Nabe (303) über den Umfang verteilte Fenster (322) aufweist, in denen die Biegefedern (305) einsitzen.

12. Drehschwingungsdämpfer nach einem der Ansprüche 1 bis 11,
**dadurch gekennzeichnet,**
**daß** die Nabe (3, 103, ...) napfförmig gestaltet ist und einen äußeren Ringsteg (8, 108, ...) aufweist, an dem die zumindest eine Biegefeder (5, 105, ...) befestigt ist.

13. Drehschwingungsdämpfer nach einem der Ansprüche 1 bis 12,
**dadurch gekennzeichnet,**
**daß** die zumindest eine Biegefeder (5, 105, ...) stoffschlüssig oder formschlüssig mit zumindest einem der Teile Nabe (3, 103, ...) oder Massekörper (4, 104, ...) verbunden ist.

14. Drehschwingungsdämpfer nach einem der Ansprüche 1 bis 13,
**dadurch gekennzeichnet,**
**daß** die Nabe (3, 103, ...) und der Massekörper (4, 104, ...) ausschließlich mittels der zumindest einen Biegefeder (5, 105, ...) aneinander gekoppelt sind.

15. Kurbelwellenanordnung mit einem Drehschwingungsdämpfer nach einem der Ansprüche 1 bis 14,
**dadurch gekennzeichnet, daß** die Nabe (3, 103, ...) des Drehschwindungsdämpfers (2, 102, ...) zumindest mittelbar mit der Kurbelwelle fest verbunden ist.
